(19) Europäisches Patentamt
European Patent Office
Office européen des brevets

(11) **EP 4 488 717 A1**

(12) **EUROPEAN PATENT APPLICATION**
published in accordance with Art. 153(4) EPC

(43) Date of publication:
**08.01.2025 Bulletin 2025/02**

(21) Application number: 23778140.6

(22) Date of filing: 27.03.2023

(51) International Patent Classification (IPC):
**G01S 13/06** (2006.01)     **H04W 4/02** (2018.01)

(52) Cooperative Patent Classification (CPC):
**G01S 13/06; H04W 4/02**

(86) International application number:
**PCT/CN2023/084200**

(87) International publication number:
**WO 2023/185775 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.03.2022 CN 202210313763

(71) Applicant: **Huawei Technologies Co., Ltd.
Shenzhen, Guangdong 518129 (CN)**

(72) Inventors:
• **ZHAO, Tianxiao
Shenzhen, Guangdong 518129 (CN)**
• **LI, Jian
Shenzhen, Guangdong 518129 (CN)**
• **ZHANG, Yunhao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **PERCEPTION METHOD AND APPARATUS**

(57)     This application relates to the field of communication technologies, and provides a sensing method and an apparatus, so that a base station can allocate sensing resources more properly, improving resource utilization, and improving accuracy of sensing a terminal by the base station. The method includes: A first node determines a target distance, where the target distance is a distance between the first node and a second node; the first node receives target information from the second node, where the target information includes location information of a first reflector and/or location information of a second reflector, the first reflector is a reflector closest to the second node, the second reflector is a reflector with a largest deflection angle relative to a direction of a target signal, and the target signal is a signal sent by the first node to the second node; the first node determines a first resource based on the target distance and the target information; and the first node senses the second node by using the first resource.

FIG. 5

## Description

This application claims priority to Chinese Patent Application No. 202210313763.6, filed with the China National Intellectual Property Administration on March 28, 2022 and entitled "SENSING METHOD AND APPARATUS", which is incorporated herein by reference in its entirety.

## TECHNICAL FIELD

This application relates to the field of communication technologies, and in particular, to a sensing method and an apparatus.

## BACKGROUND

A radar (radar) technology may be applied to non-contact target detection. During target detection, a radar transmitter emits an electromagnetic wave, and the electromagnetic wave is received by a radar receiver after being reflected by a target. Changes between the emitted electromagnetic wave and the electromagnetic wave reflected by the target are processed and analyzed, to obtain a speed of the target, a distance from the target, and other information.

Currently, to implement integrated sensing and communication, the radar technology has been widely applied to a wireless local area network (wireless local area network, WLAN), and a sensing function is implemented by using widely distributed WLAN devices. Current sensing scenarios include but are not limited to sensing an environment by a terminal, sensing an environment by a base station, sensing a terminal by a base station, and the like.

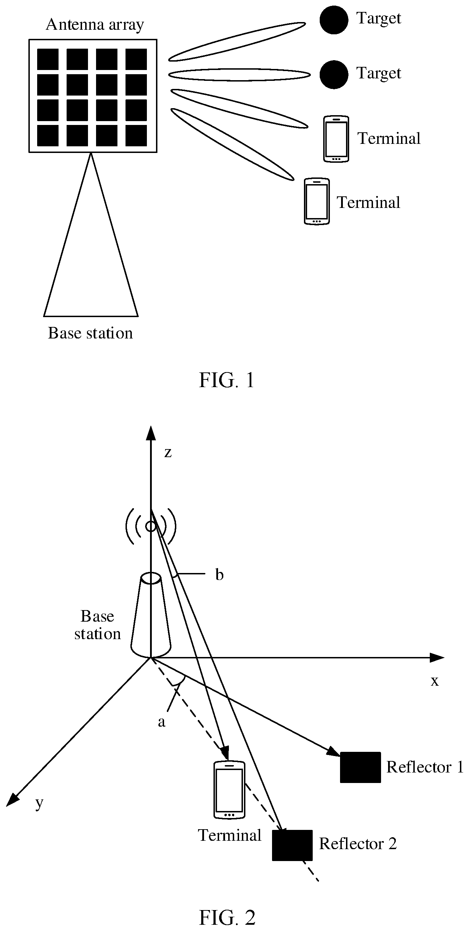

A terminal can transmit electromagnetic wave signals by using various sensors or antennas of the terminal to obtain information about an ambient environment, for example, a distance and an angle between a surrounding object and the terminal, and a shape of the surrounding object. A base station can implement target sensing by using an integrated sensing and communication system. For example, FIG. 1 is a diagram of a structure of an integrated sensing and communication system. In the system, a base station having an antenna array can sense a target while serving a plurality of communication users. The target may be a communication user, or may be a target other than a communication user.

Both the technology for sensing the environment by the terminal and the technology for sensing the terminal by the base station described above are developing rapidly. However, a process of sensing the environment by the terminal is separated from a process of sensing the terminal by the base station. Therefore, no solution has been proposed in the industry to enable the two sensing processes to assist each other in implementing more efficient sensing.

## SUMMARY

This application provides a sensing method and an apparatus, so that a base station can allocate sensing resources more properly, improving resource utilization, improving accuracy of sensing a terminal by the base station, and implementing more efficient sensing.

To achieve the foregoing objectives, this application uses the following technical solutions.

According to a first aspect, this application provides a sensing method. The method may be performed by a first node, or may be performed by a component of the first node, for example, a processor, a chip, or a chip system of the first node. In this application, an example in which the first node performs the method is used for description. The method includes: The first node determines a target distance, where the target distance is a distance between the first node and a second node; the first node receives target information from the second node, where the target information includes location information of a first reflector and/or location information of a second reflector, the first reflector is a reflector closest to the second node, the second reflector is a reflector with a largest deflection angle relative to a direction of a target signal, and the target signal is a signal sent by the first node to the second node; the first node determines a first resource based on the target distance and the target information; and the first node senses the second node by using the first resource.

Based on the foregoing technical solution, the first node may receive the location information of the first reflector and the location information of the second reflector that are sent by the second node, and determine, based on the location information, the resource used for sensing the second node, to sense the second node. In this way, the first node can allocate sensing resources more properly, improving resource utilization, and improving accuracy of sensing the second node by the first node. For example, when a reflector around the second node is close to the second node, the first node may increase an angular resolution, to improve accuracy of sensing the second node. When a reflector around the second node is far away from the second node, the first node may reduce an angular resolution, to improve resource utilization.

In addition, it is considered that a shorter distance between a reflector and the second node and a larger deflection angle relative to the direction of the target signal indicate a higher angular resolution required by the first node to distinguish the reflector from the second node. Therefore, the second node reports only the closest reflector and the reflector with the largest deflection angle relative to the direction of the target signal to the first node. If the first node can successfully distinguish the closest reflector and the reflector with the largest deflection angle relative to the direction of the target signal from the second node, the first node can also distinguish other reflectors around the second node. In this way, the second node can be effectively assisted in properly allocating sensing resources, and signaling overheads can be reduced while accuracy of sensing the second node by the first node is improved.

In a possible design, the location information of the first reflector includes a distance between the first reflector and the second node, and a deflection angle of the first reflector relative to the direction of the target signal; and the location information of the second reflector includes a distance between the second reflector and the second node, and the deflection angle of the second reflector relative to the direction of the target signal.

In a possible design, the location information of the first reflector includes an offset of a geographical location of the first reflector relative to a geographical location of the second node, and the location information of the second reflector includes an offset of a geographical location of the second reflector relative to the geographical location of the second node; or the location information of the first reflector includes a geographical location of the first reflector, and the location information of the second reflector includes a geographical location of the second reflector.

In a possible design, the target information further includes the geographical location of the second node.

In a possible design, that the target information includes location information of a first reflector and/or location information of a second reflector is: If the location information of the first reflector is the same as the location information of the second reflector, the target information includes the location information of the first reflector or the location information of the second reflector; or if the location information of the first reflector is different from the location information of the second reflector, the target information includes the location information of the first reflector and the location information of the second reflector.

In a possible design, that the first node determines a first resource based on the target distance and the target information includes: The first node determines a target angular resolution based on the target distance and the target information, where the target angular resolution indicates a capability of the first node for sensing the second node; and the first node adjusts a second resource based on the target angular resolution to obtain the first resource, where the second resource is an initial resource used by the first node to sense the second node.

In a possible design, that the first node adjusts a second resource based on the target angular resolution to obtain the first resource includes: The first node adjusts the second resource based on the angular resolution and a preset quantity of antenna ports, to obtain the first resource.

In a possible design, the target information is carried in target signaling, the target signaling includes a first field, and the first field indicates whether the location information of the first reflector is the same as the location information of the second reflector; and if the location information of the first reflector is the same as the location information of the second reflector, the target signaling further includes a second field, where the second field is used to carry the location information of the first reflector, or is used to carry the location information of the second reflector; or if the location information of the first reflector is different from the location information of the second reflector, the target signaling further includes a third field and a fourth field, where the third field is used to carry the location information of the first reflector, and the fourth field is used to carry the location information of the second reflector. Based on this design, when the location information of the first reflector is the same as the location information of the second reflector, the location information of only one of the reflectors needs to be sent. In this way, signaling overheads can be reduced.

In a possible design, the second field includes a first subfield, where the first subfield is used to carry the distance between the first reflector and the second node, or is used to carry the distance between the second reflector and the second node; or the first subfield is used to carry the offset of the geographical location of the first reflector relative to the geographical location of the second node, or is used to carry the offset of the geographical location of the second reflector relative to the geographical location of the second node; and/or the third field includes a second subfield, where the second subfield is used to carry the distance between the first reflector and the second node, or is used to carry the offset of the geographical location of the first reflector relative to the geographical location of the second node; and/or the fourth field includes a third subfield, where the third subfield is used to carry the distance between the second reflector and the second node, or is used to carry the offset of the geographical location of the second reflector relative to the geographical location of the second node, where a length of the first subfield, a length of the second subfield, or a length of the third subfield is determined based on a distance resolution of the first node, a radius of a cell in which the first node is located, and a width of a beam sent by the first node to the second node. Based on this design, a length of a field used to carry distance information of a reflector may be determined based on the distance resolution of the first node, the radius of the cell in which the first node is located, and the width of the beam sent by the first node to the second node. In different scenarios, one or more of the distance resolution of the first node, the radius of the cell in which the first node is located, the width of the beam sent by the first node to the second node, and the like may be different. In different scenarios, proper field lengths may be set for carrying the distance information of the reflector, so that precision requirements in different scenarios can be met.

In a possible design, the length of the first subfield, the length of the second subfield, or the length of the third subfield satisfies the following formula:

$$X = \mathrm{fix}(\log_2 \frac{d * \theta}{r})$$

A is the length of the first subfield, and/or the length of the second subfield, and/or the length of the third subfield, d is the radius of the cell in which the first node is located, $\theta$ is the width of the beam sent by the first node to the second node, a unit of $\theta$ is radian, r is the distance resolution of the first node, fix indicates rounding up, and $d$, $\theta$, and r are all positive real numbers.

In a possible design, a value of $X$ is 7 bits.

In a possible design, the first resource includes one or more of the following: an antenna port, a quantity of antennas, or an antenna aperture.

According to a second aspect, this application provides a sensing method. The method may be performed by a second node, or may be performed by a component of the second node, for example, a processor, a chip, or a chip system of the second node. In this application, an example in which the second node performs the method is used for description. The method includes: The second node determines target information, where the target information includes location information of a first reflector and/or location information of a second reflector, the first reflector is a reflector closest to the second node, the second reflector is a reflector with a largest deflection angle relative to a direction of a target signal, and the target signal is a signal sent by a first node to the second node; and the second node sends the target information to the first node.

In a possible design, before that the second node determines target information, the method further includes: The second node receives the target signal from the first node; and the second node determines the direction of the target signal.

In a possible design, the location information of the first reflector includes a distance between the first reflector and the second node, and a deflection angle of the first reflector relative to the direction of the target signal; and the location information of the second reflector includes a distance between the second reflector and the second node, and the deflection angle of the second reflector relative to the direction of the target signal.

In a possible design, the location information of the first reflector includes an offset of a geographical location of the first reflector relative to a geographical location of the second node, and the location information of the second reflector includes an offset of a geographical location of the second reflector relative to the geographical location of the second node; or the location information of the first reflector includes a geographical location of the first reflector, and the location information of the second reflector includes a geographical location of the second reflector.

In a possible design, the target information further includes the geographical location of the second node.

In a possible design, that the target information includes location information of a first reflector and/or location information of a second reflector is: If the location information of the first reflector is the same as the location information of the second reflector, the target information includes the location information of the first reflector or the location information of the second reflector; or if the location information of the first reflector is different from the location information of the second reflector, the target information includes the location information of the first reflector and the location information of the second reflector.

In a possible design, the target information is carried in target signaling, the target signaling includes a first field, and the first field indicates whether the location information of the first reflector is the same as the location information of the second reflector; and if the location information of the first reflector is the same as the location information of the second reflector, the target signaling further includes a second field, where the second field is used to carry the location information of the first reflector, or is used to carry the location information of the second reflector; or if the location information of the first reflector is different from the location information of the second reflector, the target signaling further includes a third field and a fourth field, where the third field is used to carry the location information of the first reflector, and the fourth field is used to carry the location information of the second reflector.

In a possible design, the second field includes a first subfield, where the first subfield is used to carry the distance between the first reflector and the second node, or is used to carry the distance between the second reflector and the second node; or the first subfield is used to carry the offset of the geographical location of the first reflector relative to the geographical location of the second node, or is used to carry the offset of the geographical location of the second reflector relative to the geographical location of the second node; and/or the third field includes a second subfield, where the second subfield is used to carry the distance between the first reflector and the second node, or is used to carry the offset of the geographical location of the first reflector relative to the geographical location of the second node; and/or the fourth subfield includes a third subfield, where the third subfield is used to carry the distance between the second reflector and the second node, or is used to carry the offset of the geographical location of the second reflector relative to the geographical location of the second node, where a length of the first subfield, a length of the second subfield, or a length of the third subfield is determined based on a distance resolution of the first node, a radius of a cell in which the first node is located, and a width of a beam sent by the first node to the second node.

In a possible design, the length of the first subfield, the length of the second subfield, or the length of the third subfield satisfies the following formula:

$$X = \text{fix}(\log_2 \frac{d * \theta}{r})$$

A is the length of the first subfield, and/or the length of the second subfield, and/or the length of the third subfield, d is the radius of the cell in which the first node is located, $\theta$ is the width of the beam sent by the first node to the second node, a unit of $\theta$ is radian, r is the distance resolution of the first node, fix indicates rounding up, and d, $\theta$, and r are all positive real numbers.

In a possible design, a value of X is 7 bits.

According to a third aspect, this application provides a communication apparatus. The communication apparatus may be the foregoing first node in the first aspect, or an apparatus including the first node, or an apparatus included in the first node, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions. In a possible design, the communication apparatus includes a processing module (or referred to as a processing unit) and a communication module (or referred to as a communication unit, a transceiver module, or a transceiver unit). The processing module is configured to determine a target distance, where the target distance is a distance between the communication apparatus and a second node; the communication module is configured to receive target information from the second node, where the target information includes location information of a first reflector and/or location information of a second reflector, the first reflector is a reflector closest to the second node, the second reflector is a reflector with a largest deflection angle relative to a direction of a target signal, and the target signal is a signal sent by the communication apparatus to the second node; the processing module is further configured to determine a first resource based on the target distance and the target information; and the processing module is further configured to sense the second node by using the first resource.

In a possible design, the location information of the first reflector includes a distance between the first reflector and the second node, and a deflection angle of the first reflector relative to the direction of the target signal; and the location information of the second reflector includes a distance between the second reflector and the second node, and the deflection angle of the second reflector relative to the direction of the target signal.

In a possible design, the location information of the first reflector includes an offset of a geographical location of the first reflector relative to a geographical location of the second node, and the location information of the second reflector includes an offset of a geographical location of the second reflector relative to the geographical location of the second node; or the location information of the first reflector includes a geographical location of the first reflector, and the location information of the second reflector includes a geographical location of the second reflector.

In a possible design, the target information further includes the geographical location of the second node.

In a possible design, that the target information includes location information of a first reflector and/or location information of a second reflector is: If the location information of the first reflector is the same as the location information of the second reflector, the target information includes the location information of the first reflector or the location information of the second reflector; or if the location information of the first reflector is different from the location information of the second reflector, the target information includes the location information of the first reflector and the location information of the second reflector.

In a possible design, the processing module is further configured to determine a target angular resolution based on the target distance and the target information, where the target angular resolution indicates a capability of the communication apparatus for sensing the second node; and the processing module is further configured to adjust a second resource based on the target angular resolution to obtain the first resource, where the second resource is an initial resource used by the communication apparatus to sense the second node.

In a possible design, the processing module is further configured to adjust the second resource based on the angular resolution and a preset quantity of antenna ports, to obtain the first resource.

In a possible design, the target information is carried in target signaling, the target signaling includes a first field, and the first field indicates whether the location information of the first reflector is the same as the location information of the second reflector; and if the location information of the first reflector is the same as the location information of the second reflector, the target signaling further includes a second field, where the second field is used to carry the location information of the first reflector, or is used to carry the location information of the second reflector; or if the location information of the first reflector is different from the location information of the second reflector, the target signaling further includes a third field and a fourth field, where the third field is used to carry the location information of the first reflector, and the fourth field is used to carry the location information of the second reflector.

In a possible design, the second field includes a first subfield, where the first subfield is used to carry the distance between the first reflector and the second node, or is used to carry the distance between the second reflector and the second node; or the first subfield is used to carry the offset of the geographical location of the first reflector relative to the geographical location of the second node, or is used to carry the offset of the geographical location of the second reflector relative to the geographical location of the second node; and/or the third field includes a second subfield, where the second subfield is used to carry the distance between the first reflector and the second node, or is used to carry the offset of the geographical location of the first reflector relative to the geographical location of the second node; and/or the fourth field includes a third subfield, where the third subfield is used to carry the distance between the second reflector and the second node, or is used to carry the offset of the geographical location of the second reflector relative to the geographical location of the second node, where a length of the first subfield, and/or a length of the second subfield, and/or a length of the third subfield are/is determined based on a distance resolution of the communication apparatus, a radius of a cell in which the communication apparatus is located, and a width of a beam sent by the communication apparatus to the second node.

In a possible design, the length of the first subfield, the length of the second subfield, or the length of the third subfield satisfies the following formula:

$$X = \mathrm{fix}(\log_2 \frac{d * \theta}{r})$$

$X$ is the length of the first subfield, the length of the second subfield, or the length of the third subfield, d is the radius of the cell in which the communication apparatus is located, $\theta$ is the width of the beam sent by the communication apparatus to the second node, a unit of $\theta$ is radian, r is the distance resolution of the communication apparatus, fix indicates rounding up, and d, $\theta$, and r are all positive real numbers.

In a possible design, a value of $X$ is 7 bits.

In a possible design, the first resource includes one or more of the following: an antenna port, a quantity of antennas, or an antenna aperture.

According to a fourth aspect, this application provides a communication apparatus. The communication apparatus may be the foregoing second node in the second aspect, or an apparatus including the second node, or an apparatus included in the second node, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions. In a possible design, the communication apparatus includes a processing module (or referred to as a processing unit) and a communication module or referred to as a communication unit, a transceiver module or a transceiver unit). The processing module is configured to determine target information, where the target information includes location information of a first reflector and/or location information of a second reflector, the first reflector is a reflector closest to the communication apparatus, the second reflector is a reflector with a largest deflection angle relative to a direction of a target signal, and the target signal is a signal sent by a first node to the communication apparatus; and the communication module is configured to send the target information to the first node.

In a possible design, the communication module is further configured to receive the target signal from the first node; and the processing module is further configured to determine the direction of the target signal.

In a possible design, the location information of the first reflector includes a distance between the first reflector and the communication apparatus, and a deflection angle of the first reflector relative to the direction of the target signal; and the location information of the second reflector includes a distance between the second reflector and the communication apparatus, and the deflection angle of the second reflector relative to the direction of the target signal.

In a possible design, the location information of the first reflector includes an offset of a geographical location of the first reflector relative to a geographical location of the communication apparatus, and the location information of the second reflector includes an offset of a geographical location of the second reflector relative to the geographical location of the communication apparatus; or the location information of the first reflector includes a geographical location of the first reflector, and the location information of the second reflector includes a geographical location of the second reflector.

In a possible design, the target information further includes the geographical location of the communication apparatus.

In a possible design, that the target information includes location information of a first reflector and/or location information of a second reflector is: If the location information of the first reflector is the same as the location information of the second reflector, the target information includes the location information of the first reflector or the location information of the second reflector; or if the location information of the first reflector is different from the location information of the second reflector, the target information includes the location information of the first reflector and the location information of the second reflector.

In a possible design, the target information is carried in target signaling, the target signaling includes a first field, and the first field indicates whether the location information of the first reflector is the same as the location information of the second reflector; and if the location information of the first reflector is the same as the location information of the second reflector, the target signaling further includes a second field, where the second field is used to carry the location information of the first reflector, or is used to carry the location information of the second reflector; or if the location information of the first reflector is different from the location information of the second reflector, the target signaling further includes a third field and a fourth field, where the third field is used to carry the location information of the first reflector, and the fourth field is used to carry the location information of the second reflector.

In a possible design, the second field includes a first subfield, where the first subfield is used to carry the distance between the first reflector and the communication apparatus, or is used to carry the distance between the second reflector and the communication apparatus; or the first subfield is used to carry the offset of the geographical location of the first reflector relative to the geographical location of the communication apparatus, or is used to carry the offset of the geographical location of the second reflector relative to the geographical location of the communication apparatus; and/or the third field includes a second subfield, where the second subfield is used to carry the distance between the first reflector and the communication apparatus, or is used to carry the offset of the geographical location of the first reflector relative to the geographical location of the communication apparatus; and/or the fourth subfield includes a third subfield, where the third subfield is used to carry the distance between the second reflector and the communication apparatus, or is used to carry the offset of the geographical location of the second reflector relative to the geographical location of the communication apparatus, where a length of the first subfield, a length of the second subfield, or a length of the third subfield is determined based on a distance resolution of the first node, a radius of a cell in which the first node is located, and a width of a beam sent by the first node to the communication apparatus.

In a possible design, the length of the first subfield, the length of the second subfield, or the length of the third subfield satisfies the following formula:

$$X = \mathrm{fix}(\log_2 \frac{d * \theta}{r})$$

$X$ is the length of the first subfield, and/or the length of the second subfield, and/or the length of the third subfield, d is the radius of the cell in which the first node is located, $\theta$ is the width of the beam sent by the first node to the communication apparatus, a unit of $\theta$ is radian, r is the distance resolution of the first node, fix indicates rounding up, and d, $\theta$, and r are all positive real numbers.

In a possible design, a value of $X$ is 7 bits.

According to a fifth aspect, this application provides a communication apparatus, including a processor and a communication interface, where the communication interface is configured to communicate with another apparatus, and the processor is configured to execute a computer program or instructions, so that the communication apparatus performs the method according to the first aspect and any design of the first aspect, or the communication apparatus performs the method according to the second aspect and any design of the second aspect.

According to a sixth aspect, this application provides a communication apparatus, including a processor and a memory, where the memory is configured to store computer instructions, and when the processor executes the instructions, the communication apparatus is enabled to perform the method according to the first aspect or the second aspect. The communication apparatus may be the foregoing first node in the first aspect, or an apparatus including the first node, or an apparatus included in the first node, for example, a chip; or the communication apparatus may be the foregoing second node in the second aspect, or an apparatus including the second node, or an apparatus included in the second node, for example, a chip.

According to a seventh aspect, this application provides a communication apparatus, including at least one processor. The processor is configured to execute a computer program or instructions stored in a memory, so that the communication apparatus performs the method according to the first aspect or the second aspect. The memory may be coupled to the processor, or may be independent of the processor. The communication apparatus may be the foregoing first node in the first aspect, or an apparatus including the first node, or an apparatus included in the first node, for example, a chip; or the communication apparatus may be the foregoing second node in the second aspect, or an apparatus including the second node, or an apparatus included in the second node, for example, a chip.

According to an eighth aspect, this application provides a computer-readable storage medium, including a computer program or instructions. When the computer program or the instructions are run on a communication apparatus, the communication apparatus is enabled to perform the method according to the first aspect and any design of the first aspect, or the communication apparatus is enabled to perform the method according to the second aspect or any design of the second aspect.

According to a ninth aspect, this application provides a computer program product, where the computer program product includes a computer program or instructions. When the computer program or the instructions are run on a computer, the computer is enabled to perform the method according to the first aspect and any design of the first aspect, or the computer is enabled to perform the method according to the second aspect and any design of the second aspect.

According to a tenth aspect, this application provides a chip, including a processing circuit and an input/output interface, where the processing circuit and the input/output interface are configured to implement the method provided in any design of the first aspect or the second aspect. The processing circuit is configured to perform a processing action in the corresponding method, and the input/output interface is configured to perform a receiving/sending action in the corresponding method.

According to an eleventh aspect, this application provides a communication system, including the communication apparatus provided in the third aspect or any design of the third aspect, and the communication apparatus provided in the fourth aspect or any design of the fourth aspect.

It should be noted that, for technical effects brought by any one of the designs of the second aspect to the eleventh aspect, refer to technical effects brought by a corresponding design of the first aspect. Details are not described herein again.

## BRIEF DESCRIPTION OF DRAWINGS

FIG. 1 is a diagram of a structure of an integrated sensing and communication system according to an embodiment of this application;
FIG. 2 is a diagram of an angular resolution according to an embodiment of this application;
FIG. 3 is a diagram of simulation based on an angular resolution according to an embodiment of this application;
FIG. 4 is a diagram of an architecture of a communication system according to an embodiment of this application;
FIG. 5 is a schematic flowchart of a sensing method according to an embodiment of this application;
FIG. 6 is a diagram of location information of a reflector according to an embodiment of this application;
FIG. 7 is a diagram of location information of another reflector according to an embodiment of this application;
FIG. 8a is a diagram of a structure of a frame format according to an embodiment of this application;
FIG. 8b is a diagram of a structure of another frame format according to an embodiment of this application;
FIG. 8c is a diagram of a structure of another frame format according to an embodiment of this application;
FIG. 9a is a diagram of a structure of another frame format according to an embodiment of this application;
FIG. 9b is a diagram of a structure of another frame format according to an embodiment of this application;
FIG. 9c is a diagram of a structure of another frame format according to an embodiment of this application;
FIG. 10 is a diagram of a location of a reflector that may be reported by a second node according to an embodiment of this application;
FIG. 11 is a diagram of a structure of a communication apparatus according to an embodiment of this application; and
FIG. 12 is a diagram of a structure of another communication apparatus according to an embodiment of this application.

## DESCRIPTION OF EMBODIMENTS

The following describes the technical solutions in embodiments of this application in detail with reference to the accompanying drawings.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, a term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of a term such as "example" or "for example" is intended to present a relative concept in a specific manner.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding, the following first describes technical terms and related concepts that may be used in embodiments of this application.

1. Antenna array

An antenna system including two or more single antennas that are fed and arranged in space according to a rule is referred to as an antenna array (antenna array for short). Antenna radiating elements that form the antenna array are referred to as array elements, or may be referred to as antenna elements.

2. Antenna port

An antenna port is a distinguishable port that can be used to perform channel estimation, and is related to a reference signal. Generally, a quantity of antenna ports is related to a type of a reference signal. There is no fixed mapping relationship between a quantity of antenna ports and an actual quantity of physical antennas, and one antenna port may correspond to a plurality of physical antennas.

3. Antenna aperture

An antenna aperture is a region around an antenna in which power is generated due to influence of an electromagnetic field, and may also be understood as an effective area of an antenna array for absorbing or radiating electromagnetic waves.

4. Radar resolution

A radar resolution refers to a difference required for a radar to distinguish two targets into separate targets, and represents a capability of the radar to distinguish between a plurality of targets in a dense environment. The radar resolution generally includes a distance resolution, a velocity resolution, and an angular resolution (angular resolution). The distance resolution is related to a width of a transmitted pulse signal, the velocity resolution is related to coherent integration time of an electromagnetic wave reflected by a target (reflected wave for short, or referred to as an echo), and the angular resolution is related to a beam width of an electromagnetic wave (transmitted wave for short) and/or a reflected wave transmitted by an antenna (or an antenna array). The angular resolution may include an angular resolution corresponding to an azimuth and/or an angular resolution corresponding to a pitch angle. The angular resolution corresponding to the azimuth may be used to distinguish two targets as separated targets in a horizontal direction, and the angular resolution corresponding to the pitch angle may be used to distinguish the two targets as separated targets in a vertical direction.

For example, as shown in FIG. 2, a first node (for example, a base station) may sense a second node (for example, a terminal) by using a radar technology, where there may be one or more reflectors (reflectors) around the second node, for example, a reflector 1 and a reflector 2, and the plurality of reflectors include but are not limited to a person, an object, and the like. The first node transmits an electromagnetic wave to the second node for sensing the second node. However, because there are reflectors around the second node, the first node may receive a reflected wave from the second node, the reflector 1, the reflector 2, or the like, and the first node may not be able to distinguish another reflector from the second node. Therefore, to help the first node more accurately sense the second node, the first node may set a proper angular resolution to distinguish the first node from another reflector.

As shown in FIG. 2, a spatial rectangular coordinate system is established by using the base station as an origin, where a is an angular resolution corresponding to an azimuth. The azimuth is an angle between a reflected wave of the terminal and a reflected wave of the reflector 1 in a horizontal direction, and may be used to distinguish the terminal from the reflector 1 in the horizontal direction. b is an angular resolution corresponding to a pitch angle. The pitch angle is an angle between the reflected wave of the terminal and a reflected wave of the reflector 2 in a vertical direction, and may be used to distinguish the terminal from the reflector 2 in the vertical (or referred to as perpendicular) direction.

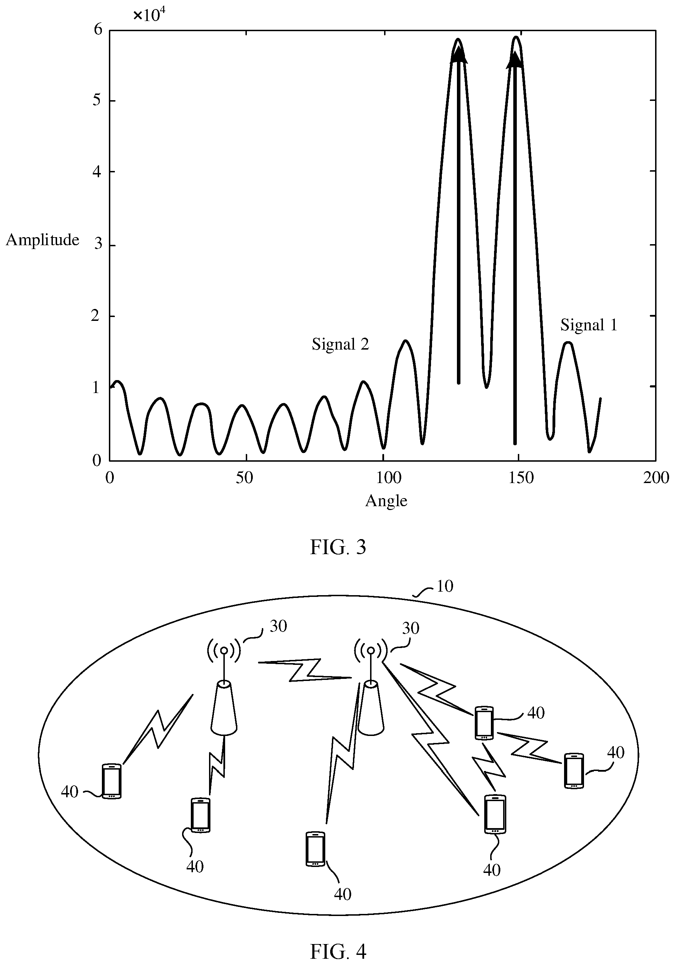

For example, FIG. 3 is a diagram of simulation based on an angular resolution. As shown in FIG. 3, at an angular resolution, if two target reflected waves at different angles can be distinguished, that is, two targets are distinguished as separate targets, two peaks appear in FIG. 3. If the two target reflected waves at the different angles cannot be distinguished, that is, the two targets cannot be distinguished as separate targets, only one peak appears in FIG. 3.

The angular resolution is mainly related to an antenna aperture of a receive antenna. In an antenna array, an antenna aperture of a receive antenna is related to a quantity of receive antennas. In a virtual aperture technology, the antenna aperture of the receive antenna may be enlarged or reduced by adjusting an arrangement spacing between transmit antennas in the antenna array, but in essence, by increasing or decreasing a quantity of virtual receive antennas.

For example, the angular resolution may be obtained through calculation by using Formula 1.1:

$$\beta = \frac{2}{N} \qquad\qquad\qquad \text{(Formula 1.1)}$$

$\beta$ is the angular resolution, and N is the quantity of receive antennas. Optionally, a unit of $\beta$ may be radian.

The foregoing describes technical terms and related concepts that may be used in embodiments of this application. Details are not described below again.

Currently, in an integrated sensing and communication (dual-functional radar and communication, DFRC) scenario, a terminal can transmit electromagnetic wave signals based on various sensors or antennas of the terminal to obtain information about an ambient environment. A base station can sense a target while serving a plurality of communication users. The target may be a communication user, or may be a user other than a communication user. Both a technology for sensing an environment by the terminal and a technology for sensing the terminal by the base station are developing rapidly. However, a process of sensing the environment by the terminal is separated from a process of sensing the terminal by the base station. Therefore, no solution has been proposed in the industry to enable the two sensing processes to assist each other in implementing more efficient sensing.

Based on this, this application provides a sensing method, so that the base station can allocate sensing resources more properly, improving resource utilization, improving accuracy of sensing a terminal by the base station, and implementing more efficient sensing.

The technical solutions in embodiments of this application may be applied to various communication systems, for example, an integrated sensing and communication system, an orthogonal frequency division multiple access (orthogonal frequency division multiple access, OFDMA) system, a single carrier frequency division multiple access (single carrier FDMA, SC-FDMA) system, a device-to-device (device-to-device, D2D) communication system, a vehicle-to-everything communication system, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a Wi-Fi communication system, a 5th generation (5th generation, 5G) mobile communication system, for example, a new radio (new radio, NR) system, and a future communication system, for example, a 6th generation (6th generation, 6G) mobile communication system. Terms "system" and "network" are interchangeable. In addition, the communication systems are further applicable to a future-oriented communication technology, and are applicable to the technical solutions provided in embodiments of this application.

The foregoing communication systems applicable to this application are merely examples for description, and communication systems applicable to this application are not limited thereto. This is stated herein once for all, and is not repeated below.

FIG. 4 shows a communication system 10 according to an embodiment of this application. The communication system 10 includes at least one network device 30 and one or more terminals 40 connected to the network device 30. Optionally, communication may be performed between different network devices 30, between different terminals 40, and between the network device 30 and the network device 40.

In the communication system 10, devices may communicate with each other by using an air interface resource (for example, a time domain resource, a frequency domain resource, a code domain resource, or a space resource). In addition, one device may further transmit an electromagnetic wave to another device through an air interface, and sense the device based on a reflected wave of the electromagnetic wave. For example, a network device 30 senses a terminal device 40, a network device 30 senses another network device 30, a terminal device 40 senses a network device 30, and a terminal device 30 senses another terminal device 30. In addition, a device (for example, the network device 30 or the terminal device 40) may further sense an ambient environment, to implement an integrated sensing and communication operation.

Optionally, the network device 30 in this embodiment of this application is a device that enables the terminal 40 to access a wireless network. The network device 30 may be a node in a radio access network, and may be referred to as a base station, or may be referred to as a radio access network (radio access network, RAN) node (or device). For example, the network device may include an evolved NodeB (NodeB, eNB, or e-NodeB, evolved NodeB) in a long term evolution (long term evolution, LTE) system or an evolved LTE system (LTE-Advanced, LTE-A), for example, a conventional macro base station eNB and a micro base station eNB in a heterogeneous network scenario; or may include a next-generation NodeB (next-generation NodeB, gNB) in a 5G new radio (new radio, NR) system; or may include a transmission reception point (transmission reception point, TRP), a home base station (for example, a home evolved NodeB, or a home NodeB, HNB), a baseband unit (baseband unit, BBU), a baseband pool BBU pool, a Wi-Fi access point (access point, AP), or the like; or may further include a central unit (central unit, CU) and a distributed unit (distributed unit, DU) in a cloud access network (cloud radio access network, Cloud RAN) system; or may include a base station in a non-terrestrial network (non-terrestrial network, NTN), where the base station may be deployed on a high-altitude platform or a satellite, and in the NTN, the network device may be used as a layer 1 (L1) relay (relay), or may be used as a base station, or may be used as a DU, or may be used as an integrated access and backhaul (integrated access and backhaul, IAB) node. Alternatively, the network device may be a device that implements a base station function in IoT, for example, a device that implements the base station function in vehicle-to-everything (vehicle-to-everything, V2X), device-to-device (device-to-device, D2D), or machine to machine (machine to machine, M2M). This is not limited in embodiments of this application.

Optionally, the terminal 40 in this embodiment of this application may be a device, such as a terminal or a chip that can be used in the terminal, configured to implement a wireless communication function. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device, an uncrewed aerial vehicle, a robot, or a computing device having a wireless communication function, another processing device connected to a wireless modem, an in-vehicle device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. Alternatively, the terminal may be a terminal having a communication function in IoT, for example, a terminal in V2X (for example, a vehicle-to-everything device), a terminal in D2D communication, or a terminal in M2M communication. The terminal may be mobile or fixed.

Optionally, the network device 30 and the terminal 40 in this embodiment of this application may also be referred to as communication apparatuses, and each may be a general-purpose device or a dedicated device. This is not specifically limited in embodiments of this application.

It should be noted that the sensing method provided in embodiments of this application may be applied between any two nodes shown in FIG. 4, for example, between terminal devices, between network devices, or between a terminal device and a network device. For specific implementation, refer to the following method embodiments. Details are not described herein again.

It should be noted that, the solutions in embodiments of this application may be further applied to another communication system, and a corresponding name may alternatively be replaced with a name of a corresponding function in the another communication system.

It should be understood that FIG. 4 is merely a simplified diagram of an example for ease of understanding. The communication system may further include another device that is not drawn in FIG. 4.

With reference to the accompanying drawings, the following describes in detail the sensing method provided in embodiments of this application by using an example in which any two nodes shown in FIG. 4 interact with each other.

It should be noted that names of messages, names of parameters in the messages, or the like in the following embodiments of this application are merely examples, and there may be other names in a specific implementation. This is not specifically limited in embodiments of this application.

It may be understood that, in embodiments of this application, a first node and/or a second node may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

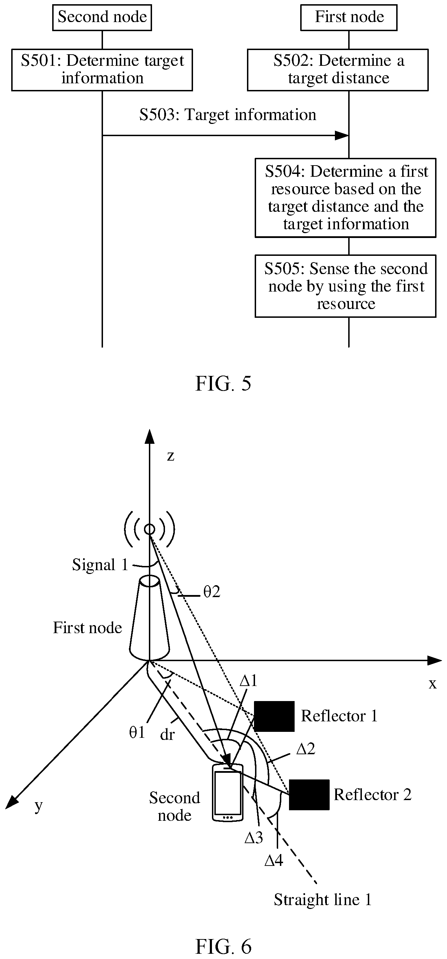

FIG. 5 shows a sensing method according to an embodiment of this application. The method includes the following steps.

S501: A second node determines target information.

The target information includes location information of a first reflector and/or location information of a second reflector. Specifically, if the location information of the first reflector is the same as the location information of the second reflector, that is, the first reflector and the second reflector are the same reflector, the target information includes the location information of the first reflector or the location information of the second reflector. If the location information of the first reflector is different from the location information of the second reflector, that is, the first reflector and the second reflector are different reflectors, the target information includes the location information of the first reflector and the location information of the second reflector.

Optionally, in a case that the location information of the first reflector and a location of the second reflector coincide or are close, and the first reflector and the second reflector are different reflectors, due to sensing precision of the second node, the second node may identify the two reflectors as one reflector. In this case, the target information may alternatively include only the location information of the first reflector or the location information of the second reflector.

The first reflector is a reflector closest to the second node, and the second reflector is a reflector with a largest deflection angle relative to a direction of a target signal. The target signal is a signal sent by a first node to the second node, that is, a signal received by the second node from the first node.

It may be understood that there may be a plurality of reflectors around the second node. The plurality of reflectors include but are not limited to a person, an object, and the like. The plurality of reflectors include the first reflector and the second reflector. Optionally, there may be one or more first reflectors, and/or there may be one or more second reflectors.

For example, the second node may transmit a sensing signal to a surrounding reflector. For example, the second node may transmit the sensing signal by using various sensors (for example, an infrared sensor, a camera, and a radio frequency component), and determine a distance, an angle, and the like between the surrounding reflector and the second node based on an echo signal of the sensing signal. The second node may determine (or generate) the target information based on location information of the closest reflector among the surrounding reflectors and the location information of the reflector with the largest deflection angle relative to the direction of the target signal.

In a possible implementation, the location information of the first reflector includes a distance between the first reflector and the second node, and a deflection angle of the first reflector relative to the direction of the target signal. The location information of the second reflector includes a distance between the second reflector and the second node, and the deflection angle of the second reflector relative to the direction of the target signal.

For example, in this implementation, the location information of the first reflector and the location information of the second reflector may be shown in Table 1.

**Table 1**

| Location information of a first reflector | | Location information of a second reflector | |
|---|---|---|---|
| d1 | ∆1 | d2 | ∆2 |

d1 is the distance between the first reflector and the second node, and ∆1 is the deflection angle of the first reflector relative to the direction of the target signal. d2 is the distance between the second reflector and the second node, and ∆2 is the deflection angle of the second reflector relative to the direction of the target signal.

For ease of understanding, the following describes, with reference to FIG. 6, the direction of the target signal and the deflection angle in this embodiment of this application.

For example, as shown in FIG. 6, a signal 1 is the target signal. In this embodiment of this application, the direction of the target signal is an orientation of the target signal, that is, a direction in which the target signal is projected to a horizontal plane, for example, a direction of a straight line 1 in which the signal 1 is projected to the horizontal plane is a direction of the signal 1. For example, the direction of the straight line 1 may be an angle between the straight line 1 and an x-axis, or an angle between the straight line 1 and a y-axis.

A deflection angle of a reflector relative to the direction of the target signal is an angle between a connection line between the reflector and the second node and the direction of the target signal, and the angle is located on a side of the reflector and the first node. For example, as shown in FIG. 6, angles ∆1 and ∆2 are deflection angles of reflectors relative to the direction of the target signal, and ∆3 and ∆4 are not deflection angles of the reflectors relative to the direction of the target signal.

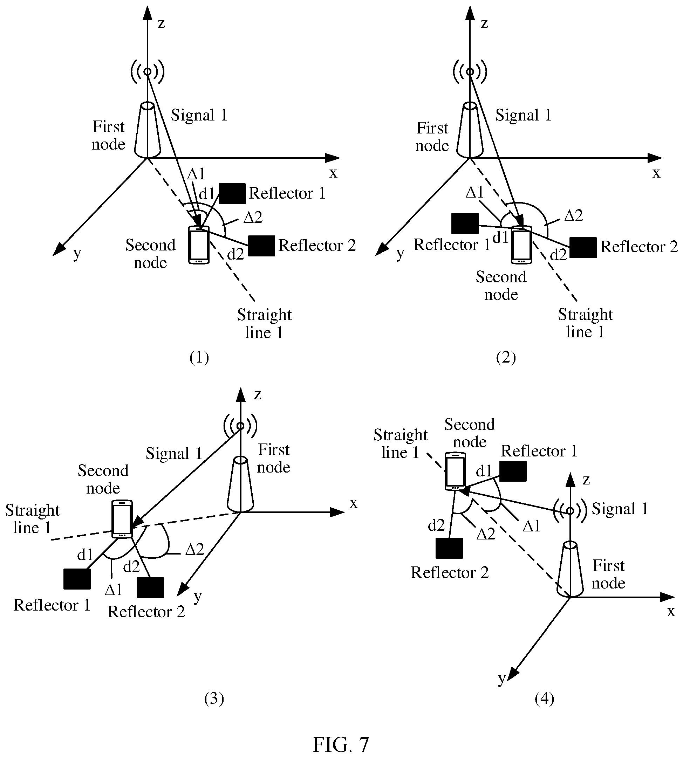

To understand the deflection angle in this embodiment of this application more clearly, for example, with reference to Table 1, FIG. 7 shows location information of the first reflector and the second reflector in different scenarios. For meanings of parts in FIG. 7, refer to the description in Table 1.

Optionally, in this embodiment of this application, a value range of the deflection angles shown in FIG. 6 and FIG. 7 is 0° to 180°. It may be understood that the deflection angle of the second reflector relative to the direction of the target signal is the largest, that is, a difference between the deflection angle of the second reflector relative to the direction of the target signal and 180° is the smallest.

It should be noted that when an angle of a reflector is indicated by another angle (for example, ∆3 or ∆4 in FIG. 6), a value range corresponding to the angle may be different from the value range of the deflection angles in this embodiment of this application. However, regardless of which angle is used for representation, the angle may be correspondingly converted to the deflection angle in this embodiment of this application.

In another possible implementation, the location information of the first reflector includes an offset (or referred to as an offset) of a geographical location of the first reflector relative to a geographical location of the second node. The location information of the second reflector includes an offset of a geographical location of the second reflector relative to the geographical location of the second node.

Alternatively, the location information of the first reflector includes a geographical location of the first reflector. The location information of the second reflector includes a geographical location of the second reflector.

Alternatively, the location information of the first reflector includes an offset of a geographical location of the first reflector relative to a geographical location of the second node. The location information of the second reflector includes a geographical location of the second reflector.

Alternatively, the location information of the first reflector includes a geographical location of the first reflector. The location information of the second reflector includes an offset of a geographical location of the second reflector relative to a geographical location of the second node.

Optionally, in this implementation, the target information may further include the geographical location of the second node.

For example, the second node may transmit a sensing signal to a surrounding reflector. For example, the second node may transmit the sensing signal by using various sensors (for example, an infrared sensor, a camera, and a radio frequency component), and determine a distance, an angle, and the like between the reflector and the second node based on an echo signal of the sensing signal, to determine the first reflector and the second reflector. In addition, the second node may further initiate a standard location estimation procedure to obtain the geographical location of the second node. Since the standard location estimation procedure belongs to a current technology, for specific implementation of the standard location estimation procedure, refer to the current technology, and details are not described in this specification. Based on the geographical location of the second node, and the foregoing sensed distance, angle, and the like between the reflector and the second node, the second node may determine the geographical location of the first reflector, and/or determine the offset of the geographical location of the first reflector relative to the geographical location of the second node; and determine the geographical location of the second reflector, and/or determine the offset of the geographical location of the second reflector relative to the geographical location of the second node, and the like.

It may be understood that, in this implementation, the geographical location is an absolute geographical location, namely, a location obtained by using the entire earth as a reference system. For example, the geographical location may be indicated by coordinates in a general coordinate system. The general coordinate system may be a (North-East-Down, NED) coordinate system centered on the spherical center of the earth. Certainly, the general coordinate system may be another type of coordinate system. This application is not limited thereto.

For example, Table 2 shows a form of each of the geographical location of the second node, the location information of the first reflector, and the location information of the second reflector in this implementation.

**Table 2**

| Geographical location of a second node | Offset of a geographical location of a first reflector relative to the geographical location of the node | Offset of a geographical location of a second reflector relative to the geographical location of the second node |
|---|---|---|
| (x, y, z) | ($\Delta x1$, $\Delta y1$, $\Delta z1$) | (Ax2, $\Delta y2$, $\Delta z2$) |

(x, y, z) indicates coordinates of the second node in the NED coordinate system, ($\Delta x1$, $\Delta y1$, $\Delta z1$) indicates an offset of coordinates of the first reflector in the NED coordinate system relative to the coordinates of the second node, namely, differences on an x-axis, a y-axis, and a z-axis, and ($\Delta x2$, $\Delta y2$, $\Delta z2$) indicates an offset of coordinates of the second reflector in the NED coordinate system relative to the coordinates of the second node.

For example, Table 3 shows another form of each of the geographical location of the second node, the location information of the first reflector, and the location information of the second reflector in this implementation.

**Table 3**

| Geographical location of a second node | Geographical location of a first reflector | Geographical location of a second reflector |
|---|---|---|
| (x, y, z) | $(x_a, y_a, z_a)$ | $(x_b, y_b, z_b)$ |

(x, y, z) indicates coordinates of the second node in the NED coordinate system, $(x_a, y_a, z_a)$ indicates coordinates of the first reflector in the NED coordinate system, and $(x_b, y_b, z_b)$ indicates coordinates of the second reflector in the NED coordinate system.

It should be noted that the forms of the geographical location of the second node, the location information of the first reflector, and the location information of the second reflector shown in Table 2 and Table 3 are merely examples. In another type of coordinate system, the geographical location of the second node, the location information of the first reflector, and the location information of the second reflector may be correspondingly converted into another representation form. This is not specifically limited in this application.

It should be noted that, in this embodiment of this application, in consideration of a sensing capability of the second node, the second node senses only a reflector that is located on a same horizontal plane as the second node. In other words, the second node, the first reflector, and the second reflector are located on a same horizontal plane.

S502: The first node determines a target distance.

The target distance is a distance between the first node and the second node. Optionally, the target distance may be a horizontal distance between the first node and the second node. For example, the target distance is dr shown in FIG. 6.

In a possible implementation, the first node may send a sounding signal to the second node, and then the first node may determine the target distance based on an echo signal of the sounding signal. For example, the first node may estimate, by using information about the echo signal, the target distance by using a conventional millimeter-wave radar distance estimation method, a super-resolution estimation algorithm, a maximum likelihood-based estimation algorithm, and other various types of algorithms, or may estimate the target distance by estimating a transmission delay of the sounding signal and/or the echo signal, or the like.

In another possible implementation, the first node may determine the target distance based on the geographical location of the second node.

A manner of determining the target distance by the first node is not limited in this application.

It should be noted that an execution sequence of the foregoing steps S501 and S502 is not limited in this application.

S503: The second node sends the target information to the first node. Correspondingly, the first node receives the target information from the second node.

Optionally, the target information may be carried in target signaling. The target signaling includes a first field. The first resource indicates whether the location information of the first reflector is the same as the location information of the second reflector, that is, indicates whether the first reflector is the same as the second reflector. For example, the first field may be indicated by one bit (bit). For example, if the first field is "1", it indicates that the location information of the first reflector is the same as the location information of the second reflector. If the first field is "0", it indicates that the location information of the first reflector is different from the location information of the second reflector, or vice versa.

If the location information of the first reflector is the same as the location information of the second reflector, the target signaling includes a second field, where the second field may be used to carry the location information of the first reflector, or may be used to carry the location information of the second reflector. Specifically, the second field may be used to carry the distance between the first reflector and the second node and the deflection angle of the first reflector relative to the direction of the target signal, or used to carry the distance between the second reflector and the second node and the deflection angle of the second reflector relative to the direction of the target signal, or used to carry the offset of the geographical location of the first reflector relative to the geographical location of the second node, or used to carry the offset of the geographical location of the second reflector relative to the geographical location of the second node, or used to carry the geographical location of the first reflector, or used to carry the geographical location of the second reflector.

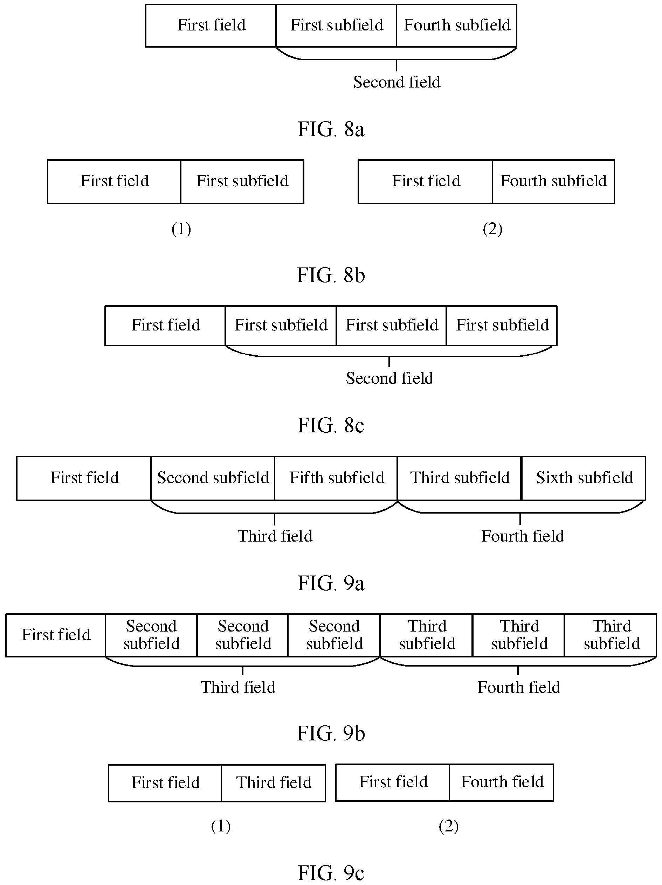

In a possible example, FIG. 8a shows a frame format of the target signaling. As shown in FIG. 8a, the target signaling includes a first field and a second field, and the second field includes a first subfield and a fourth subfield. The first subfield may be used to carry the distance between the first reflector and the second node, or used to carry the distance between the second reflector and the second node. The fourth subfield is used to carry the deflection angle of the first reflector relative to the direction of the target signal, or used to carry the deflection angle of the second reflector relative to the direction of the target signal.

Optionally, in this embodiment of this application, the distance between the first reflector and the second node and the deflection angle of the first reflector relative to the direction of the target signal may be separately reported to the first node. Similarly, the distance between the second reflector and the second node and the deflection angle of the second reflector relative to the direction of the target signal may also be separately reported to the first node.

In another possible example, FIG. 8b shows another frame format of the target signaling. As shown in (1) in FIG. 8b, the target signaling includes a first field and a first subfield. The first subfield may be used to carry the distance between the first reflector and the second node, or used to carry the distance between the second reflector and the second node. As shown in (2) in FIG. 8b, the target signaling includes a first field and a fourth subfield. The fourth subfield may be used to carry the deflection angle of the first reflector relative to the direction of the target signal, or used to carry the deflection angle of the second reflector relative to the direction of the target signal.

In still another possible example, FIG. 8c shows still another frame format of the target signaling. As shown in FIG. 8c, the target signaling includes a first field and a second field, and the second field includes three first subfields. The three first subfields may be used to carry the offset of the geographical location of the first reflector relative to the geographical location of the second node, or used to carry the offset of the geographical location of the second reflector relative to the geographical location of the second node. Specifically, with reference to Table 2, the three first subfields are respectively used to carry $\Delta x1$, $\Delta y1$, and $\Delta z1$, or $Ax2$, $\Delta y2$, and $\Delta z2$.

Based on the foregoing solution, when the location information of the first reflector is the same as the location information of the second reflector, the location information of only one of the reflectors needs to be sent. In this way, signaling overheads can be reduced.

If the location information of the first reflector is different from the location information of the second reflector, the target signaling includes a third field and a fourth field, where the third field is used to carry the location information of the first reflector, and the fourth field is used to carry the location information of the second reflector. Specifically, the third field may be used to carry the distance between the first reflector and the second node and the deflection angle of the first reflector relative to the direction of the target signal. The fourth field is used to carry the distance between the second reflector and the second node and the deflection angle of the second reflector relative to the direction of the target signal. Alternatively, the third field is used to carry the offset of the geographical location of the first reflector relative to the geographical location of the second node, and the fourth field is used to carry the offset of the geographical location of the second reflector relative to the geographical location of the second node. Alternatively, the third field is used to carry the geographical location of the first reflector, and the fourth field is used to carry the geographical location of the second reflector.

In a possible example, FIG. 9a shows a frame format of the target signaling. As shown in FIG. 9a, the target signaling includes a first field, a third field, and a fourth field. The third field includes a second subfield and a fifth subfield, where the second subfield may be used to carry the distance between the first reflector and the second node, and the fifth subfield may be used to carry the deflection angle of the first reflector relative to the direction of the target signal; and/or the fourth field includes a third subfield and a sixth subfield, where the third subfield is used to carry the distance between the second reflector and the second node, and the sixth subfield may be used to carry the deflection angle of the second reflector relative to the direction of the target signal.

In another possible example, FIG. 9b shows another frame format of the target signaling. As shown in FIG. 9b, the target signaling includes a first field, three second subfields, and three third subfields. The three second subfields are used to carry the offset of the geographical location of the first reflector relative to the geographical location of the second node. Specifically, with reference to Table 2, the three second subfields are respectively used to carry $\Delta x1$, $\Delta y1$, and $\Delta z1$. The three third subfields are used to carry the offset of the geographical location of the second reflector relative to the geographical location of the second node. Specifically, with reference to Table 2, the three third subfields are respectively used to carry $\Delta x2$, $\Delta y2$, and $\Delta z2$.

Optionally, in this embodiment of this application, the location information of the first reflector and the location information of the second reflector may alternatively be separately sent to the second node. For example, FIG. 9c shows still another frame format of the target signaling. As shown in (1) in FIG. 9c, the target signaling includes a first field and a third field. As shown in (2) in FIG. 9c, the target signaling includes a first field and a fourth field. For descriptions of the fields, refer to the foregoing description.

Optionally, the frame formats shown in FIG. 9a to FIG. 9c may further include a fifth field (not shown in the figure), where the fifth field may be used to carry the geographical location of the second node. Optionally, the geographical location of the second node and the location information of the first reflector and/or the location information of the second reflector may alternatively be separately sent to the second node. This is not specifically limited in this application.

Optionally, a length of the first subfield, a length of the second subfield, or a length of the third subfield may be determined based on a minimum value and a maximum value of the distances between the second node and the reflectors. The minimum value is a minimum distance between the second node and the reflector when the first node can distinguish the second node from the reflector, that is, a distance resolution of the first node. The maximum value is a maximum distance of distances that are between the reflectors and the second node and that are sent by the second node to the first node.

Optionally, the maximum distance may be determined based on a radius of a cell in which the first node is located and a width of a beam sent by the first node to the second node.

For example, the maximum distance $d_{max}$ may satisfy Formula 1.2:

$$\mathrm{d}_{max} = d * \theta \qquad\qquad (\text{Formula } 1.2)$$

$d$ is the radius of the cell in which the first node is located, $\theta$ is the width of the beam sent by the first node to the second node, and a unit of $\theta$ is radian. Optionally, the width of the beam may be a horizontal width of the beam. For example, the beam may be a beam that is sent by the first node to the second node and that is used to sense the second node, for example, a sounding beam, or may be another beam sent by the first node to the second node. d and $\theta$ are both positive real numbers.

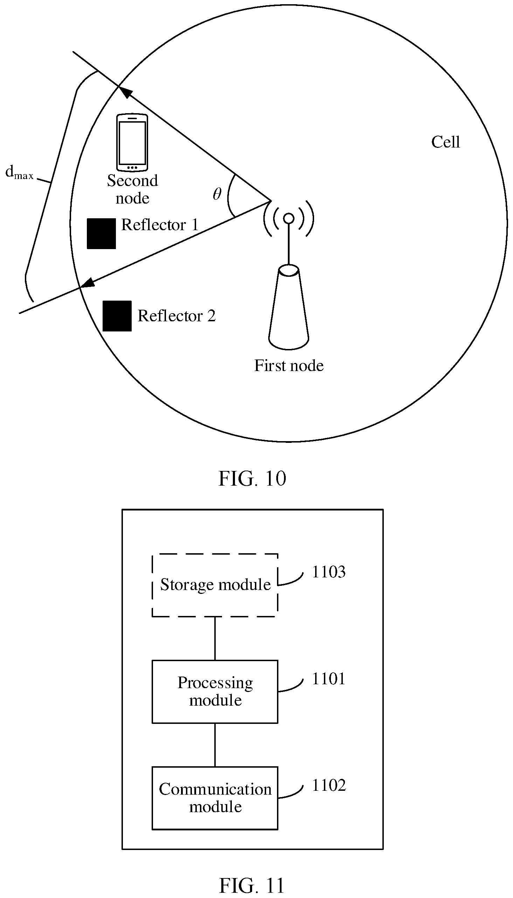

For ease of understanding, as shown in FIG. 10, when the first node sends an electromagnetic wave to the second node, the first node can receive a reflected wave of a reflector only when the reflector is located within a coverage area of a beam of the electromagnetic wave, and a case in which the second node cannot be distinguished from the reflector may occur. Otherwise, the reflected wave of the reflector cannot be received. Therefore, the second node needs to send, to the first node, only location information of a reflector located within the coverage area of the beam of the first node. It is assumed that a beam width of the electromagnetic wave is $\theta$. In other words, the second node needs to send, to the first node, only location information of a reflector located within the range $\theta$, for example, location information of a reflector 1, and does not need to send, to the second node, location information of a reflector located beyond the range $\theta$, for example, location information of a reflector 2.

As the distance between the second node and the first node becomes longer, the coverage area of the beam of the electromagnetic wave becomes larger. When the first node can provide a service for the second node, a farthest distance between the second node and the first node is the radius of the cell in which the first node is located. Therefore, a maximum distance of distances that are between the reflectors and the second node and that are sent by the second node to the first node may be determined based on an arc length $d_{max}$ shown in FIG. 10.

Therefore, optionally, the length of the first subfield, the length of the second subfield, or the length of the third subfield may be determined based on the distance resolution of the first node, the radius of the cell in which the first node is located, and the width of the beam sent by the first node to the second node. It may be understood that the distance resolution of the first node may refer to a minimum distance between two targets when the first node can distinguish the two targets as separate targets. Therefore, based on different scenarios, a proper field length may be set for reporting distance information of a reflector, so that precision requirements of different scenarios can be met.

Optionally, the distance resolution of the first node may be determined based on a service scenario (or referred to as a sensing scenario). In other words, different service scenarios may have different requirements on the distance resolution of the first node. The first node may sense the second node in the service scenario by using a first resource.

For example, Table 4 shows requirements of some different service scenarios on the distance resolution of the first node.

**Table 4**

| Sensing object type | Service scenario | | Requirement on a distance resolution (r) |
|---|---|---|---|
| People and livestock | Smart city | Crowd density detection and abnormal person detection (for example, sudden running) | 1 m (meter, m) |
| | Smart home and hospital | Patient respiration and heartbeat measurement, abnormal behavior detection (for example, wrestling), and abnormal entry detection | 1 m |
| | Smart agriculture | Livestock positioning | 1 m |
| Robot, uncrewed aerial vehicle (unmanned aerial vehicle, UAV), and virtual reality (virtual reality, VR) device | Smart industry | Robot positioning and speed measurement, industrial flaw detection, product quality inspection, and the like | 0.01 m |
| | Smart industry and smart entertainment | VR device positioning and speed measurement, orientation angle measurement, and the like | 0.1 m |
| | Smart energy | Positioning and speed measurement of an inspection robot/UAV | 0.1 m |
| Vehicle | Super-energy transportation | Vehicle positioning and speed measurement | 1 m |
| Environment | Environmental imaging | Reconstruction of indoor, street, and other environments | 0.1 m |
| ... | ... | ... | ... |

As shown in Table 4, for the service scenario of livestock positioning in smart agriculture, a requirement on a distance resolution of the first node is 1 m; for the service scenario of positioning and speed measurement of inspection robot/UAV in smart energy, a requirement on the distance resolution of the first node is 0.1 m, and so on. For descriptions of other service scenarios, refer to similar descriptions of the foregoing service scenarios.

It should be noted that Table 4 is merely an example for description for ease of understanding of this application, and does not constitute a limitation on this application.

In a possible example, the length of the first subfield, the length of the second subfield, or the length of the third subfield, namely, X, may be obtained through calculation based on Formula 1.2 and Formula 1.3:

$$X = \mathrm{fix}(\log_2 \frac{\mathrm{d}_{max}}{r}) \qquad \text{(Formula 1.3)}$$

X is the length of the first subfield, and/or the length of the second subfield, and/or the length of the third subfield, r is the distance resolution of the first node, r is a positive real number, and fix indicates rounding. Optionally, in this embodiment of this application, fix may indicate rounding up. For example, a value of X may be 7 bits.

Formula 1.4 may be obtained by simplifying Formula 1.2 and Formula 1.3:

$$X = \mathrm{fix}(\log_2 \frac{d*\theta}{r}) \qquad \text{(Formula 1.4)}$$

For descriptions of parameters in Formula 1.4, refer to the related descriptions in Formula 1.2 and Formula 1.3.

In another possible example, the length of the first subfield, and/or the length of the second subfield, and/or the length of the third subfield, namely, X, may alternatively be obtained through calculation based on Formula 1.5:

$$X = \mathrm{fix}(\log_2 \frac{d*\theta}{r} + c1) \qquad \text{(Formula 1.5)}$$

c1 is a preset constant, and may be used to eliminate an error. A specific value of c1 may be set by a developer based on an actual requirement. For descriptions of other parameters in Formula 1.5, refer to the related descriptions in Formula 1.2 and Formula 1.3.

In still another possible example, the length of the first subfield, and/or the length of the second subfield, and/or the length of the third subfield, namely, X, may alternatively be obtained through calculation based on Formula 1.6:

$$X = \mathrm{fix}\left[\log_2 (\frac{d*\theta}{r} + c2)\right] \qquad \text{(Formula 1.6)}$$

c2 is a preset constant, and may be used to eliminate an error. A specific value of c2 may be set by a developer based on an actual requirement. The values of c1 and c2 may be the same or may be different. For descriptions of other parameters in Formula 1.6, refer to the related descriptions in Formula 1.2 and Formula 1.3.

In still another possible example, the length of the first subfield, and/or the length of the second subfield, and/or the length of the third subfield, namely, X , may alternatively be obtained through calculation based on Formula 1.7:

$$X = \mathrm{fix}(\log_2 \frac{(d+c3)*(\theta+c4)}{(r+c5)}) \qquad \text{(Formula 1.7)}$$

c3, c4, and c5 are all preset constants, and may be used to eliminate an error of each parameter. Specific values of c3, c4, and c5 may be set by a developer based on an actual requirement. The values of c3, c4, and c5 may be the same or different, and the values of c3, c4, and c5 may be the same as or different from the values of c1 and c2. For descriptions of other parameters in Formula 1.7, refer to the related descriptions in Formula 1.2 and Formula 1.3.

It should be noted that the developer may set a proper preset constant for one or more of the parameters in Formula 1.4 based on an actual requirement, to eliminate an error of the corresponding parameter. This is not specifically limited in this application.

For example, Table 5 shows values of $d_{max}$ and X in different scenarios.

Table 5

| Service scenarios and requirements on a distance resolution of a first node | Outdoor scenario (cell radius: 200 m) | Outdoor scenario (cell radius: 500 m) | Indoor scenario (cell radius: 100 m) |
|---|---|---|---|
| Smart city and smart agriculture ($r$=1 m) | $d_{max}$ =35 m<br>$X$=6 bits (bits) | $d_{max}$ =90 m<br>$X$=7 bits | $d_{max}$ =18 m<br>$X$=5 bits |
| Environment reconstruction ($r$=0.1 m) | - | - | $d_{max}$ =18 m<br>$X$=8 bits |

(continued)

| Service scenarios and requirements on a distance resolution of a first node | Outdoor scenario (cell radius: 200 m) | Outdoor scenario (cell radius: 500 m) | Indoor scenario (cell radius: 100 m) |
|---|---|---|---|
| Smart industry ($r$=0.01 m to 0.1 m) | - | - | $d_{max}$=18 m<br>$X$=11 bits |
| Vehicle positioning (r=1 m) | $d_{max}$=35 m<br>$X$=6 bits | $d_{max}$=90 m<br>$X$=7 bits | - |
| ... | ... | ... | ... |

It should be noted that Table 5 is merely an example for description for ease of understanding of this application, and does not constitute a limitation on this application.

As shown in Table 5, in service scenarios such as smart city and smart agriculture, a requirement on the distance resolution of the first node is 1 m. When a radius of an outdoor cell is 200 m, $d_{max}$ obtained through calculation is 35 m, a value of $X$ is 6 bits, and so on. For descriptions of other scenarios, refer to the descriptions of smart city and smart agriculture. Details are not described herein again. It should be noted that the cell radius of the indoor scenario shown in Table 5 may refer to a longest distance at which the first node can provide a service for the second node.

Optionally, a length of the fourth subfield, and/or a length of the fifth subfield, and/or a length of the sixth subfield may be 8 bits, or may be another length. This is not specially limited in this application.

S504: The first node determines the first resource based on the target distance and the target information.

Optionally, the first node may determine a target angular resolution based on the target distance and the target information, where the target angular resolution indicates a capability of the first node for sensing the second node. The first node may adjust a second resource based on the target angular resolution to obtain the first resource, where the second resource is an initial resource used by the first node to sense the second node.

It may be understood that, in a case of a same distance between a reflector and the second node, a larger deflection angle of the reflector relative to the direction of the target signal indicates a higher angular resolution required by the first node to distinguish the second node from the reflector.

Optionally, the target angular resolution may include an angular resolution corresponding to an azimuth and/or an angular resolution corresponding to a pitch angle.

For example, still refer to FIG. 6. An example in which the first reflector is the reflector 1 and the second reflector is the reflector 2 is used. $\theta 1$ in FIG. 6 is an angular resolution corresponding to an azimuth between the second node and the reflector 1. $\theta 2$ is an angular resolution corresponding to a pitch angle between the second node and the reflector 2. It may be understood that, between the second node and a reflector, both an angular resolution corresponding to an azimuth and an angular resolution corresponding to a pitch angle may be included. FIG. 6 merely uses one of the angular resolutions as an example for description. The first node may obtain values of $\theta 1$ and $\theta 2$ through calculation based on the target distance and the target information by using a triangular relationship, and then adjust the second resource based on the values of $\theta 1$ and/or $\theta 2$. For example, the first node may obtain a quantity of receive antennas through calculation based on Formula 1.1, and then adjust a current quantity of receive antennas based on the quantity of receive antennas.

Optionally, the first node may adjust the second resource based on the angular resolution and a preset quantity of antenna ports to obtain the first resource.

Optionally, the first node may increase or decrease the preset quantity of antenna ports for the second resource based on the angular resolution, to obtain the first resource. For example, there may be four preset quantity of antenna ports. Optionally, the preset quantity of antenna ports used by the first node may alternatively be dynamically adjusted. In other words, the preset quantity of antenna ports used each time may be the same or may be different.

It may be understood that, because the sensing capability of the second node may be lower than that of the first node, a deviation may exist in the target information (for example, the deflection angle of the reflector relative to the direction of the target signal) sent by the second node to the first node. Therefore, the first node may further determine the value of the preset quantity of antenna ports based on other information (for example, signal fading information). When a signal-to-noise ratio is high, the value of the preset quantity of antenna ports may be increased. When the signal-to-noise ratio is low, the value of the preset quantity of antenna ports may be decreased.

Optionally, the first node may further adjust the second resource according to another standard to obtain the first resource, for example, increase or decrease a quantity of antennas each time, or enlarge or reduce an antenna aperture each time. This application is not limited thereto.

For example, the first resource includes one or more of the following: an antenna port, a quantity of antennas, or an antenna aperture. Optionally, the first resource may be a resource of a transmit antenna, or may be a resource of a receive antenna. This is not limited in this application.

S505: The first node senses the second node by using the first resource.

In this way, when sensing the second node, the first node sends an electromagnetic wave to the second node. If the first node receives reflected waves of the second node and the reflector, because the first node adjusts a sensing resource, the first node can distinguish the second node from the reflector, implementing sensing of the second node. Alternatively, because the first node adjusts a sensing resource, the first node may receive only the reflected wave of the second node, implementing sensing of the second node.

It may be understood that when a sensing resource is used to receive a reflected wave of a target, the sensing resource cannot be used for another purpose. In this way, based on the foregoing technical solution, the first node may receive the location information of the first reflector and the location information of the second reflector that are sent by the second node, and determine, based on the location information, the resource used for sensing the second node, to sense the second node. In this way, the first node can allocate sensing resources more properly, improving resource utilization, and improving accuracy of sensing the second node by the first node. For example, when a reflector around the second node is close to the second node, the first node may increase an angular resolution, to improve accuracy of sensing the second node. When a reflector around the second node is far away from the second node, the first node may reduce an angular resolution, to improve resource utilization.

In addition, it is considered that a shorter distance between a reflector and the second node and a larger deflection angle relative to the direction of the target signal indicate a higher angular resolution required by the first node to distinguish the reflector from the second node. Therefore, the second node reports only the closest reflector and the reflector with the largest deflection angle relative to the direction of the target signal to the first node. If the first node can successfully distinguish the closest reflector and the reflector with the largest deflection angle relative to the direction of the target signal from the second node, the first node can also distinguish other reflectors around the second node. In this way, the second node can be effectively assisted in properly allocating sensing resources, and signaling overheads can be reduced while accuracy of sensing the second node by the first node is improved.

Optionally, before step S501, the method shown in FIG. 5 may further include step S506 and step S507 (not shown in the figure).

S506: The first node sends the target signal to the second node. Correspondingly, the second node receives the target signal from the first node.

For example, the target signal may be a sounding signal, and the sounding signal may be a signal used by the first node to sense the second node. For example, the sounding signal includes but is not limited to a channel state information reference signal (channel state information reference signal, CSI-RS), a linear frequency modulation (Linear Frequency Modulation, LFM) signal, or the like. Alternatively, the target signal may be a location detection signal, and the location detection signal may be a signal used by the second node to determine the geographical location of the second node. Certainly, the target signal may alternatively be a signal that is sent by the first node to the second node and that is of another type. The type of the target signal is not specially limited in this application.

S507: The second node determines the direction of the target signal.

The direction of the target signal may be used by the second node to determine the second reflector.

For example, the second node may measure the direction of the target signal by using an antenna array of the second node. For example, the second node may determine the direction of the target signal by using various algorithms. The algorithms are, for example, a multiple signal classification (multiple signal classification, MUSIC) algorithm and an estimation of signal parameters via rotational invariance techniques (estimation of signal parameters via rotational invariance techniques, ESPRIT) algorithm. This application is not limited thereto.

The foregoing mainly describes the solutions provided in embodiments of this application from the perspective of the methods. It may be understood that to implement the foregoing functions, the communication apparatus (for example, the first node or the second node) includes corresponding hardware structures and/or software modules for performing the functions. With reference to the units and algorithm steps described in embodiments disclosed in this application, embodiments of this application can be implemented in a form of hardware or hardware and computer software. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the communication apparatus may be divided into functional modules based on the foregoing method example. For example, each functional module may be obtained through division based on each corresponding function, or two or more functions may be integrated into one processing unit. The integrated unit may be implemented in a form of hardware, or may be implemented in a form of a software functional module. It should be noted that, in this embodiment of this application, division into the units is an example, and is merely a logical function division. In actual implementation, another division manner may be used.

FIG. 11 shows a communication apparatus according to an embodiment of this application. The communication apparatus includes a processing module 1101 and a communication module 1102.

In a possible example, the communication apparatus is a first node. The processing module 1101 is configured to support the first node in performing steps S502, S504, and S505 in FIG. 5, and/or another processing operation that needs to be performed by the first node in this embodiment of this application. The communication module 1102 is configured to support the first node in performing step S503 in FIG. 5, and/or another communication operation that needs to be performed by the first node in this embodiment of this application.

In another possible example, the communication apparatus is a second node. The processing module 1101 is configured to support the second node in performing step S501 in FIG. 5, and/or another processing operation that needs to be performed by the second node in this embodiment of this application. The communication module 1102 is configured to support the second node in performing step S503 in FIG. 5, and/or another communication operation that needs to be performed by the second node in this embodiment of this application.

Optionally, the communication apparatus may further include a storage module 1103, configured to store program code and data of the communication apparatus. The data may include but is not limited to original data, intermediate data, or the like.

The processing module 1101 may be a processor or a controller, for example, may be a CPU, a general-purpose processor, an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The communication module 1102 may be a communication interface, a transceiver, a transceiver circuit, or the like. The communication interface is a general name. In a specific implementation, the communication interface may include a plurality of interfaces, for example, an interface between a base station and a terminal and/or another interface.

The storage module 1103 may be a memory.

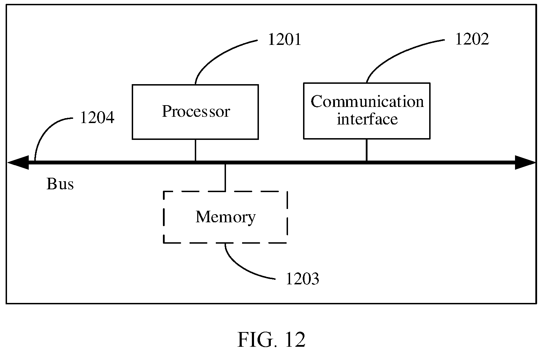

When the processing module 1101 is a processor, the communication module 1102 is a communication interface, and the storage module 1103 is a memory, the communication apparatus in this embodiment of this application may be as shown in FIG. 12.

Refer to FIG. 12. The communication apparatus includes a processor 1201 and a communication interface 1202. Optionally, the communication apparatus may further include a memory 1203. The memory 1203 may be independent of the processor 1201, and coupled to the processor 1201 through an interface, or may be integrated with the processor 1201. Optionally, the communication apparatus may further include a bus 1204. The communication interface 1202, the processor 1201, and the memory 1203 may be connected to each other through the bus 1204. The bus 1204 may be a peripheral component interconnect (peripheral component interconnect, PCI) bus, an extended industry standard architecture (extended industry standard architecture, EISA) bus, or the like. The bus 1204 may be classified into an address bus, a data bus, a control bus, and the like. For ease of representation, only one thick line is used to represent the bus in FIG. 12, but this does not mean that there is only one bus or only one type of bus.

Optionally, an embodiment of this application further provides a computer program product including computer instructions. When the computer instructions are run on a computer, the computer is enabled to perform the method described in the foregoing embodiments.

Optionally, an embodiment of this application further provides a computer-readable storage medium. The computer-readable storage medium stores computer instructions. When the computer instructions are run on a computer, the computer is enabled to perform the method described in the foregoing embodiment.

Optionally, an embodiment of this application further provides a chip, including a processing circuit and an input/output interface. The processing circuit and the input/output interface are configured to implement the method described in the foregoing embodiments. The processing circuit is configured to perform a processing action in the corresponding method, and the input/output interface is configured to perform a receiving/sending action in the corresponding method.

Optionally, an embodiment of this application further provides a communication system, including the first node provided in the foregoing embodiments and the second node provided in the foregoing embodiments.

A person of ordinary skill in the art may understand that: All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid state disk (Solid State Disk, SSD)), or the like.

In the several embodiments provided in this application, it should be understood that the disclosed system, apparatus, and method may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separate, and a part displayed as a unit may or may not be a physical unit, that is, may be located at one position, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a better implementation. Based on such an understanding, the technical solutions of this application essentially or the part making contribution may be implemented in a form of a software product. The computer software product is stored in a readable storage medium, such as a floppy disk, a hard disk, or an optical disc of a computer, and includes several instructions for instructing a computer device (which may be a personal computer, a server, or a network device) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.   A sensing method, wherein the method comprises:

   determining, by a first node, a target distance, wherein the target distance is a distance between the first node and a second node;
   receiving, by the first node, target information from the second node, wherein the target information comprises location information of a first reflector and/or location information of a second reflector, the first reflector is a reflector closest to the second node, the second reflector is a reflector with a largest deflection angle relative to a direction of a target signal, and the target signal is a signal sent by the first node to the second node;
   determining, by the first node, a first resource based on the target distance and the target information; and
   sensing, by the first node, the second node by using the first resource.

2.   The method according to claim 1, wherein the location information of the first reflector comprises a distance between the first reflector and the second node, and a deflection angle of the first reflector relative to the direction of the target signal; and the location information of the second reflector comprises a distance between the second reflector and the second node, and the deflection angle of the second reflector relative to the direction of the target signal.

3.   The method according to claim 1, wherein the location information of the first reflector comprises an offset of a geographical location of the first reflector relative to a geographical location of the second node, and the location information of the second reflector comprises an offset of a geographical location of the second reflector relative to the geographical location of the second node; or
   the location information of the first reflector comprises a geographical location of the first reflector, and the location information of the second reflector comprises a geographical location of the second reflector.

4.   The method according to claim 3, wherein the target information further comprises the geographical location of the second node.

5.   The method according to any one of claims 1 to 4, wherein that the target information comprises location information of a first reflector and/or location information of a second reflector is:

if the location information of the first reflector is the same as the location information of the second reflector, the target information comprises the location information of the first reflector or the location information of the second reflector; or

if the location information of the first reflector is different from the location information of the second reflector, the target information comprises the location information of the first reflector and the location information of the second reflector.

6. The method according to any one of claims 1 to 5, wherein the target information is carried in target signaling, the target signaling comprises a first field, and the first field indicates whether the location information of the first reflector is the same as the location information of the second reflector; and

if the location information of the first reflector is the same as the location information of the second reflector, the target signaling further comprises a second field, wherein the second field is used to carry the location information of the first reflector, or is used to carry the location information of the second reflector; or

if the location information of the first reflector is different from the location information of the second reflector, the target signaling further comprises a third field and a fourth field, wherein the third field is used to carry the location information of the first reflector, and the fourth field is used to carry the location information of the second reflector.

7. The method according to claim 6, wherein

the second field comprises a first subfield, wherein the first subfield is used to carry the distance between the first reflector and the second node, or is used to carry the distance between the second reflector and the second node; or the first subfield is used to carry the offset of the geographical location of the first reflector relative to the geographical location of the second node, or is used to carry the offset of the geographical location of the second reflector relative to the geographical location of the second node; and/or

the third field comprises a second subfield, wherein the second subfield is used to carry the distance between the first reflector and the second node, or is used to carry the offset of the geographical location of the first reflector relative to the geographical location of the second node; and/or

the fourth field comprises a third subfield, wherein the third subfield is used to carry the distance between the second reflector and the second node, or is used to carry the offset of the geographical location of the second reflector relative to the geographical location of the second node, wherein

a length of the first subfield, a length of the second subfield, or a length of the third subfield is determined based on a distance resolution of the first node, a radius of a cell in which the first node is located, and a width of a beam sent by the first node to the second node.

8. The method according to claim 7, wherein the length of the first subfield, the length of the second subfield, or the length of the third subfield satisfies the following formula:

$$X = \text{fix}(\log_2 \frac{d * \theta}{r}),$$

wherein
X is the length of the first subfield, the length of the second subfield, or the length of the third subfield, $d$ is the radius of the cell in which the first node is located, $\theta$ is the width of the beam sent by the first node to the second node, a unit of $\theta$ is radian, r is the distance resolution of the first node, fix indicates rounding up, and d, $\theta$, and r are all positive real numbers.

9. The method according to claim 8, wherein a value of X is 7 bits.

10. The method according to any one of claims 1 to 9, wherein the first resource comprises one or more of the following: an antenna port, a quantity of antennas, or an antenna aperture.

11. A sensing method, wherein the method comprises:

determining, by a second node, target information, wherein the target information comprises location information of a first reflector and/or location information of a second reflector, the first reflector is a reflector closest to the second node, the second reflector is a reflector with a largest deflection angle relative to a direction of a target signal, and the target signal is a signal sent by a first node to the second node; and

sending, by the second node, the target information to the first node.

12. The method according to claim 11, wherein before the determining, by a second node, target information, the method further comprises:

receiving, by the second node, the target signal from the first node; and

determining, by the second node, the direction of the target signal.

13. The method according to claim 11 or 12, wherein the location information of the first reflector comprises a distance between the first reflector and the second node, and a deflection angle of the first reflector relative to the direction of the target signal; and the location information of the second reflector comprises a distance between the second reflector and the second node, and the deflection angle of the second reflector relative to the direction of the target signal.

14. The method according to claim 11 or 12, wherein the location information of the first reflector comprises an offset of a geographical location of the first reflector relative to a geographical location of the second node, and the location information of the second reflector comprises an offset of a geographical location of the second reflector relative to the geographical location of the second node; or the location information of the first reflector comprises a geographical location of the first reflector, and the location information of the second reflector comprises a geographical location of the second reflector.

15. The method according to claim 14, wherein the target information further comprises the geographical location of the second node.

16. The method according to any one of claims 11 to 15, wherein that the target information comprises location information of a first reflector and/or location information of a second reflector is:

if the location information of the first reflector is the same as the location information of the second reflector, the target information comprises the location information of the first reflector or the location information of the second reflector; or

if the location information of the first reflector is different from the location information of the second reflector, the target information comprises the location information of the first reflector and the location information of the second reflector.

17. The method according to any one of claims 11 to 16, wherein the target information is carried in target signaling, the target signaling comprises a first field, and the first field indicates whether the location information of the first reflector is the same as the location information of the second reflector; and

if the location information of the first reflector is the same as the location information of the second reflector, the target signaling further comprises a second field, wherein the second field is used to carry the location information of the first reflector, or is used to carry the location information of the second reflector; or

if the location information of the first reflector is different from the location information of the second reflector, the target signaling further comprises a third field and a fourth field, wherein the third field is used to carry the location information of the first reflector, and the fourth field is used to carry the location information of the second reflector.

18. The method according to claim 17, wherein

the second field comprises a first subfield, wherein the first subfield is used to carry the distance between the first reflector and the second node, or is used to carry the distance between the second reflector and the second node; or the first subfield is used to carry the offset of the geographical location of the first reflector relative to the geographical location of the second node, or is used to carry the offset of the geographical location of the second reflector relative to the geographical location of the second node; and/or the third field comprises a second subfield, wherein the second subfield is used to carry the distance between the first reflector and the second node, or is used to carry the offset of the geographical location of the first reflector relative to the geographical location of the second node; and/or

the fourth field comprises a third subfield, wherein the third subfield is used to carry the distance between the second reflector and the second node, or is used to carry the offset of the geographical location of the second reflector relative to the geographical location of the second node, wherein

a length of the first subfield, a length of the second subfield, or a length of the third subfield is determined based on a distance resolution of the first node, a radius of a cell in which the first node is located, and a width of a beam sent by the first node to the second node.

19. The method according to claim 18, wherein the length of the first subfield, the length of the second subfield, or the length of the third subfield satisfies the following formula:

$$X = \mathrm{fix}(\log_2 \frac{d * \theta}{r}),$$

wherein

$X$ is the length of the first subfield, the length of the second subfield, or the length of the third subfield, $d$ is the radius of the cell in which the first node is located, $\theta$ is the width of the beam sent by the first node to the second node, a unit of $\theta$ is radian, r is the distance resolution of the first node, fix indicates rounding up, and d, $\theta$, and r are all positive real numbers.

20. The method according to claim 19, wherein a value of $X$ is 7 bits.

21. A communication apparatus, comprising a processing module and a communication module, wherein

the processing module is configured to determine a target distance, wherein the target distance is a distance between the communication apparatus and a second node;
the communication module is configured to receive target information from the second node, wherein the target information comprises location information of a first reflector and/or location information of a second reflector, the first reflector is a reflector closest to the second node, the second reflector is a reflector with a largest deflection angle relative to a direction of a target signal, and the target signal is a signal sent by the communication apparatus to the second node;
the processing module is further configured to determine a first resource based on the target distance and the target information; and
the processing module is further configured to sense the second node by using the first resource.

22. The communication apparatus according to claim 21, wherein the location information of the first reflector comprises a distance between the first reflector and the second node, and a deflection angle of the first reflector relative to the direction of the target signal; and the location information of the second reflector comprises a distance between the second reflector and the second node, and the deflection angle of the second reflector relative to the direction of the target signal.

23. The communication apparatus according to claim 21, wherein the location information of the first reflector comprises an offset of a geographical location of the first reflector relative to a geographical location of the second node, and the location information of the second reflector comprises an offset of a geographical location of the second reflector relative to the geographical location of the second node; or
the location information of the first reflector comprises a geographical location of the first reflector, and the location information of the second reflector comprises a geographical location of the second reflector.

24. The communication apparatus according to claim 23, wherein the target information further comprises the geographical location of the second node.

25. The communication apparatus according to any one of claims 21 to 24, wherein that the target information comprises location information of a first reflector and/or location information of a second reflector is:

if the location information of the first reflector is the same as the location information of the second reflector, the target information comprises the location information of the first reflector or the location information of the second reflector; or
if the location information of the first reflector is different from the location information of the second reflector, the target information comprises the location information of the first reflector and the location information of the second reflector.

26. The communication apparatus according to any one of claims 21 to 25, wherein the target information is carried in target signaling, the target signaling comprises a first field, and the first field indicates whether the location information of the first reflector is the same as the location information of the second reflector; and

if the location information of the first reflector is the same as the location information of the second reflector, the target signaling further comprises a second field, wherein the second field is used to carry the location information of the first reflector, or is used to carry the location information of the second reflector; or
if the location information of the first reflector is different from the location information of the second reflector, the target signaling further comprises a third field and a fourth field, wherein the third field is used to carry the location information of the first reflector, and the fourth field is used to carry the location information of the second reflector.

27. The communication apparatus according to claim 26, wherein

the second field comprises a first subfield, wherein the first subfield is used to carry the distance between the first reflector and the second node, or is used to carry the distance between the second reflector and the second node; or the first subfield is used to carry the offset of the geographical location of the first reflector relative to the geographical location of the second node, or is used to carry the offset of the geographical location of the second reflector relative to the geographical location of the second node; and/or
the third field comprises a second subfield, wherein the second subfield is used to carry the distance between the first reflector and the second node, or is used to carry the offset of the geographical location of the first reflector relative to the geographical location of the second node; and/or
the fourth field comprises a third subfield, wherein the third subfield is used to carry the distance between the second reflector and the second node, or is used to carry the offset of the geographical location of the second reflector relative to the geographical location of the second node, wherein
a length of the first subfield, a length of the second subfield, or a length of the third subfield is determined based on a distance resolution of the communication apparatus, a radius of a cell in which the communication apparatus is located, and a width of a beam sent by the communication apparatus to the second node.

28. The communication apparatus according to claim 27, wherein the length of the first subfield, the length of the second subfield, or the length of the third subfield satisfies the following formula:

$$X = \text{fix}(\log_2 \frac{d * \theta}{r}),$$

wherein
A is the length of the first subfield, the length of the second subfield, or the length of the third subfield, $d$ is the radius of the cell in which the communication apparatus is located, $\theta$ is the width of the beam sent by the communication apparatus to the second node, a unit of $\theta$ is radian, $r$ is the distance resolution of the communication apparatus, fix indicates rounding up, and $d$, $\theta$, and r are all positive real numbers.

29. The communication apparatus according to any one of claims 21 to 28, wherein the first resource comprises one or more of the following: an antenna port, a quantity of antennas, or an antenna aperture.

30. A communication apparatus, comprising a processing module and a communication module, wherein

the processing module is configured to determine target information, wherein the target information comprises location information of a first reflector and/or location information of a second reflector, the first reflector is a reflector closest to the communication apparatus, the second reflector is a reflector with a largest deflection angle relative to a direction of a target signal, and the target signal is a signal sent by a first node to the communication apparatus; and
the communication module is configured to send the target information to the first node.

31. The communication apparatus according to claim 30, wherein

the communication module is further configured to receive the target signal from the first node; and

the processing module is further configured to determine the direction of the target signal.

32. The communication apparatus according to claim 30 or 31, wherein the location information of the first reflector comprises a distance between the first reflector and the communication apparatus, and a deflection angle of the first reflector relative to the direction of the target signal; and the location information of the second reflector comprises a distance between the second reflector and the communication apparatus, and the deflection angle of the second reflector relative to the direction of the target signal.

33. The communication apparatus according to claim 30 or 31, wherein the location information of the first reflector comprises an offset of a geographical location of the first reflector relative to a geographical location of the communication apparatus, and the location information of the second reflector comprises an offset of a geographical location of the second reflector relative to the geographical location of the communication apparatus; or
the location information of the first reflector comprises a geographical location of the first reflector, and the location information of the second reflector comprises a geographical location of the second reflector.

34. The communication apparatus according to any one of claims 30 to 33, wherein that the target information comprises location information of a first reflector and/or location information of a second reflector is:

if the location information of the first reflector is the same as the location information of the second reflector, the target information comprises the location information of the first reflector or the location information of the second reflector; or
if the location information of the first reflector is different from the location information of the second reflector, the target information comprises the location information of the first reflector and the location information of the second reflector.

35. The communication apparatus according to any one of claims 30 to 34, wherein the target information is carried in target signaling, the target signaling comprises a first field, and the first field indicates whether the location information of the first reflector is the same as the location information of the second reflector; and

if the location information of the first reflector is the same as the location information of the second reflector, the target signaling further comprises a second field, wherein the second field is used to carry the location information of the first reflector, or is used to carry the location information of the second reflector; or
if the location information of the first reflector is different from the location information of the second reflector, the target signaling further comprises a third field and a fourth field, wherein the third field is used to carry the location information of the first reflector, and the fourth field is used to carry the location information of the second reflector.

36. The communication apparatus according to claim 35, wherein

the second field comprises a first subfield, wherein the first subfield is used to carry the distance between the first reflector and the communication apparatus, or is used to carry the distance between the second reflector and the communication apparatus; or the first subfield is used to carry the offset of the geographical location of the first reflector relative to the geographical location of the communication apparatus, or is used to carry the offset of the geographical location of the second reflector relative to the geographical location of the communication apparatus; and/or
the third field comprises a second subfield, wherein the second subfield is used to carry the distance between the first reflector and the communication apparatus, or is used to carry the offset of the geographical location of the first reflector relative to the geographical location of the communication apparatus; and/or
the fourth field comprises a third subfield, wherein the third subfield is used to carry the distance between the second reflector and the communication apparatus, or is used to carry the offset of the geographical location of the second reflector relative to the geographical location of the communication apparatus, wherein
a length of the first subfield, a length of the second subfield, or a length of the third subfield is determined based on a distance resolution of the first node, a radius of a cell in which the first node is located, and a width of a beam sent by the first node to the communication apparatus.

37. The communication apparatus according to claim 36, wherein the length of the first subfield, the length of the second subfield, or the length of the third subfield satisfies the following formula:

$$X = \text{fix}(\log_2 \frac{d * \theta}{r}),$$

wherein

$X$ is the length of the first subfield, the length of the second subfield, or the length of the third subfield, $d$ is the radius of the cell in which the first node is located, $\theta$ is the width of the beam sent by the first node to the communication apparatus, a unit of $\theta$ is radian, r is the distance resolution of the first node, fix indicates rounding up, and $d$, $\theta$, and $r$ are all positive real numbers.

38. A communication apparatus, comprising a processor and a communication interface, wherein the communication interface is configured to communicate with another apparatus, and the processor is configured to execute a computer program or instructions, so that the communication apparatus performs the method according to any one of claims 1 to 10, or the communication apparatus performs the method according to any one of claims 11 to 20.

39. A computer-readable storage medium, comprising a computer program or instructions, wherein when the computer program or the instructions are run on a communication apparatus, the communication apparatus is enabled to perform the method according to any one of claims 1 to 10, or the communication apparatus is enabled to perform the method according to any one of claims 11 to 20.

40. A computer program product, wherein the computer program product comprises a computer program or instructions, and

when the computer program or the instructions are run on a computer, the computer is enabled to perform the method according to any one of claims 1 to 10, or the computer is enabled to perform the method according to any one of claims 11 to 20.

41. A communication system, comprising a first node and/or a second node, wherein the first node is configured to implement the method according to any one of claims 1 to 10, and the second node is configured to implement the method according to any one of claims 11 to 20.

Antenna array

Target

Target

Terminal

Terminal

Base station

FIG. 1

z

b

Base
station

x

a

y

Terminal

Reflector 1

Reflector 2

FIG. 2

FIG. 3

FIG. 4

```
┌─────────────────┐                    ┌──────────────┐
│   Second node   │                    │  First node  │
└─────────────────┘                    └──────────────┘
┌─────────────────┐                    ┌──────────────────┐
│ S501: Determine │                    │ S502: Determine a│
│      target     │                    │  target distance │
│   information   │                    │                  │
└─────────────────┘                    └──────────────────┘

        S503: Target information
        ─────────────────────────────────────▶

                                    ┌──────────────────────┐
                                    │ S504: Determine a first│
                                    │ resource based on the │
                                    │ target distance and the│
                                    │   target information  │
                                    └──────────────────────┘
                                    ┌──────────────────────┐
                                    │ S505: Sense the second│
                                    │ node by using the first│
                                    │       resource        │
                                    └──────────────────────┘
```

FIG. 5

FIG. 6

FIG. 7

| First field | First subfield | Fourth subfield |
|---|---|---|

Second field

FIG. 8a

| First field | First subfield |
|---|---|

(1)

| First field | Fourth subfield |
|---|---|

(2)

FIG. 8b

| First field | First subfield | First subfield | First subfield |
|---|---|---|---|

Second field

FIG. 8c

| First field | Second subfield | Fifth subfield | Third subfield | Sixth subfield |
|---|---|---|---|---|

Third field          Fourth field

FIG. 9a

| First field | Second subfield | Second subfield | Second subfield | Third subfield | Third subfield | Third subfield |
|---|---|---|---|---|---|---|

Third field          Fourth field

FIG. 9b

| First field | Third field |
|---|---|

(1)

| First field | Fourth field |
|---|---|

(2)

FIG. 9c

FIG. 10

FIG. 11

FIG. 12

## INTERNATIONAL SEARCH REPORT

| | International application No. |
|---|---|
| | **PCT/CN2023/084200** |

| A. | CLASSIFICATION OF SUBJECT MATTER |
|---|---|
| | G01S13/06(2006.01)i;H04W4/02(2018.01)i |
| | According to International Patent Classification (IPC) or to both national classification and IPC |

| B. | FIELDS SEARCHED |
|---|---|
| | Minimum documentation searched (classification system followed by classification symbols) |
| | IPC: G01S H04W |
| | Documentation searched other than minimum documentation to the extent that such documents are included in the fields searched |
| | Electronic data base consulted during the international search (name of data base and, where practicable, search terms used) |
| | CNABS; CNTXT; CNKI; VEN; USTXT; EPTXT; WOTXT; IEEE: 华为, 感知, 节点, 基站, 站点, 终端, 手机, 通信, 通讯, 反射体, 人, 物, 反射, 距离, 最近, 最远, 偏移角度, 偏移, 偏置, 夹角, 角度, 位置, sense, node, base station, station, STA, terminal, communicat+, reflect+, distance, nearest, farthest, offset, angle, position |

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112748425 A (HUAWEI TECHNOLOGIES CO., LTD.) 04 May 2021 (2021-05-04) description, paragraphs [0106]-[0207], and figures 5-14 | 1-41 |
| A | CN 109451430 A (HUAWEI TECHNOLOGIES CO., LTD.) 08 March 2019 (2019-03-08) entire document | 1-41 |
| A | CN 113747465 A (HUAWEI TECHNOLOGIES CO., LTD.) 03 December 2021 (2021-12-03) entire document | 1-41 |
| A | CN 114205046 A (TSINGHUA UNIVERSITY) 18 March 2022 (2022-03-18) entire document | 1-41 |
| A | US 2015378004 A1 (UNIVERSITY OF CAPE TOWN) 31 December 2015 (2015-12-31) entire document | 1-41 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 May 2023** | **24 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/084200** |

| Patent document cited in search report | | | Publication date (day/month/year) | Patent family member(s) | | | Publication date (day/month/year) |
| --- | --- | --- | --- | --- | --- | --- | --- |
| CN | 112748425 | A | 04 May 2021 | None | | | |
| CN | 109451430 | A | 08 March 2019 | None | | | |
| CN | 113747465 | A | 03 December 2021 | None | | | |
| CN | 114205046 | A | 18 March 2022 | None | | | |
| US | 2015378004 | A1 | 31 December 2015 | US | 10082561 | B2 | 25 September 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210313763